(19) Europäisches Patentamt
European Patent Office
Office européen des brevets

(11) Publication number: 0 237 275
A2

(12) # EUROPEAN PATENT APPLICATION

(21) Application number: 87301922.8

(22) Date of filing: 05.03.87

(51) Int. Cl.$^3$: C 08 L 81/06
C 08 L 67/02

(30) Priority: 06.03.86 US 836887

(43) Date of publication of application:
16.09.87 Bulletin 87/38

(84) Designated Contracting States:
AT BE CH DE ES FR GB GR IT LI LU NL SE

(71) Applicant: CELANESE CORPORATION
1211 Avenue of the Americas
New York New York 10036(US)

(72) Inventor: Salee, Gideon
92 The Paddock
Williamsville New York(US)

(72) Inventor: Olukalns, Andris
811 Fenchurch Court
Cincinnati Ohio(US)

(74) Representative: De Minvielle-Devaux, Ian Benedict Peter et al,
CARPMAELS & RANSFORD 43, Bloomsbury Square
London WC1A 2RA(GB)

(54) **Improved weatherability of polysulfone/aromatic copolyester blends.**

(57) A composition with improved weatherability consisting essentially of about 1 wt.% to about 99 wt.% of a polysulfone and about 1 wt.% to about 99 wt.% of a polyarylate copolyester. The polyester is formed by reacting about 20 mole % to about 30 mole % terephthalic acid, about 20 mole % to about 30 mole % isophthalic acid, and about 40 mole % to about 60 mole % bisphenol-A. The polysulfone mixed with said polyester has better impact strength retention than does polysulfone alone.

EP 0 237 275 A2

# IMPROVED WEATHERABILITY OF POLYSULFONE/AROMATIC COPOLYESTER BLENDS

0237275

## BACKGROUND OF THE INVENTION

This invention relates to an improved weatherability composition consisting of a polysulfone and polyarylate.

The polysulfones and polyarylates used in this invention are well-known in the art. U. S. Patent 3,939,119, issued to O'Shea, discloses polyether-polythioether, polysulfone thermoplastic polymers. These polymers have high glass transition temperatures and high impact strength. Representative aromatic polysulfones are disclosed in U. S. Patent 3,718,620, issued to Hart et al, U.S.S.R. Patent 622,823, to Korshak et al, and in Kwiatkowski et al, High Use Temperature Polyarylsulfones, a paper presented at the October 1976 S.P.E. meeting in Cleveland, Ohio. At the same meeting, a paper was also presented entitled Polyethersulfones: Combining Easy Injection Moldability With High Temperature Engineering Properties, by Chasin et al, showing representative polyethersulfones.

The polyarylates of this invention are also well-known. Representative patents disclosing polyarylates are U. S. 3,856,556, to Brozowski et al, U. S. 3,933,713, to Sokolov et al, and U. S. 4,035,542, to Rosenthal et al.

U. S. Patent 4,180,494, issued to Fromuth et al, discloses a high impact and solvent resistant composition comprising a polyarylate, an aromatic polycarbonate and butadiene-based coreshell polymer. U. S. Patent 4,157,325, issued to Charles et al, discloses a molding composition comprising polybutylene terephthalate. U. S. Patents 4,088,626 and 4,119,607, both issued to Gergen et al, disclose multicomponent polymer blends of hydrogenated block copolymers and aromatic polyesters. U. S. Patent 4,246,381, issued to Robeson, discloses an aromatic copolyester derived from cyclohexanedimethanol, an alkylene glycol, and an aromatic dicarboxylic acid, blended with a polyarylate derived from a dihydric phenol and an aromatic dicarboxylic acid. U. S. Patent 4,231,922, issued to Robeson, discloses a polyarylate copolyester in combination with a vinyl aromatic, an acrylate, an unsaturated nitrile, or mixtures thereof, grafted onto an unsaturated elastomeric backbone.

U. S. Patent 4,286,075, issued to Robeson et al, discloses a molding composition comprising (a) a polyarylate derived from a dihydric phenol and a mixture of isophthalic and terephthalic acid, of which more than about 65 mole % is terephthalic acid, (b) a polyarylate derived from a dihydric phenol and a mixture of terephthalic acid and isophthalic acid, of which more than about 70 mole % is isophthalic acid, and

(c) at least one thermoplastic polymer. Suitable thermoplastic polymers are polyesters, aromatic polycarbonates, polystyrenes, alkyl acrylates, polyurethanes, polyvinyl chlorides, polyaryl ethers (including polysulfone), copolyester block polymers, polyhydroxyethers, or combinations thereof. These compositions have improved environmental stress crack resistance.

U. S. Patent 4,433,118, issued to Schwartz et al, discloses a polyarylate and poly(methylene-benzoate) blend having improved weatherability.

U. S. Patent 4,459,384, issued to Matzner et al, discloses a process of forming a polyester or polyester carbonate in the presence of processing aids. A sulfone may be used as one of the processing aids. The polyester can be prepared by reacting bisphenol-A with mixtures of terephthalic and isophthalic acids.

## DETAILED DESCRIPTION OF THE INVENTION

The polyarylate copolyester/polysulfone composition having improved weatherability properties are prepared by blending the polysulfone and polyarylate copolyester components in an amount ranging from about 1 wt.% to about 99 wt.% for each component. A preferred amount for the polysulfone is from about 80 wt.% to about 99 wt.%. A preferred amount for the polyarylate copolyester is from about 1 wt.% to about 20 wt.%.

The polysulfone is preferably a polyaryl or polyethersulfone, more preferably a polyarylsulfone. A most preferred embodiment of the polysulfone is UDEL™ polysulfone by Union Carbide. This compound is referred to in the above-mentioned paper by Kwiatkowski et al, and in U. S. Patents 4,088,626 and 4,119,607. UDEL™ polysulfone is a polyether sulfone having repeating units of the following structure:

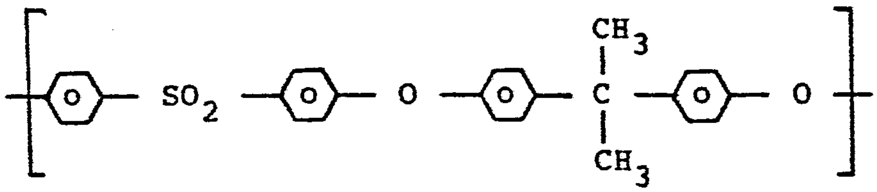

The polyarylate copolyester is formed by reacting about 20 mole % to about 30 mole % terephthalic acid, about 20 mole % to about 30 mole % isophthalic acid, and about 40 mole % to about 60 mole % bisphenol-A. Preferably about 25 mole % of terephthalic acid, about 25 mole % of isophthalic acid, and about 50 mole % of bisphenol-A are reacted. A preferred embodiment of the polyarylate copolyester is Ardel-D-100™, a product of Union Carbide. Ardel D-100™ and related polyarylates are prepared by any of the well-known prior art polyester forming reactions, such as the reaction of the acid chlorides of the aromatic dicarboxylic acids with the dihydric phenol, the reaction of the diaryl esters of the aromatic dicarboxylic acids with the dihydric phenols, and the reaction of the aromatic diacids with diester derivatives of the

dihydric phenol. These processes are described in, for example, U. S. Patents 3,317,464, 3,948,856, 3,780,148, 3,824,213, and 3,133,898. These polyarylates have a reduced viscosity of from about 0.4 to about 1.0 as measured in p-chlorophenol at 49°C (0.2 g/100 ml). In particular, Ardel D-100™ has a reduced viscosity of 0.66 as measured in p-chlorophenol at 49°C (0.2 g/100 ml).This product is also referred to in above-mentioned U. S. Patents 4,231,922, 4,246,381, and 4,286,075.

The various compositions were tested in a Weatherometer for as long as three months. Before being placed in the Weatherometer, the original Izod impact strength was measured. This impact strength was then measured at one month, two months, and, for preferred compositions, after three months. The results are given in terms of percentage of original impact strength retained.

## Examples 1-5

Compositions of polysulfone* and polyarylate** alone, as well as mixtures thereof, were tested for weatherability. These samples were placed in a Weatherometer for two months. The Weatherometer used was a QUV™ Weatherometer made by Q-Panel Corporation. It utilizes a fluorescent ultraviolet light source and runs through cycles of evaporative cooling and heating. Percentage of original impact strength was measured at one month and two months and the results are given in Table 1 below.

Table 1

| Example | Composition | Percentage of Original Impact Strength | |
|---|---|---|---|
| | | One Month | Two Months |
| 1 | 100% polysulfone* | 80 | 50 |
| 2 | 100% polyarylate** | 88 | 86 |
| 3 | 98% polyarylate**<br>2% polysulfone* | 81 | 75 |
| 4 | 90% polyarylate**<br>10% polysulfone* | 92 | 72 |
| 5 | 80% polyarylate**<br>20% polysulfone* | 88 | 85 |

* UDEL polysulfone
** Ardel-D-100

## Examples 6-8

Other polysulfone/polyarylate copolyester compositions were placed in the Weatherometer for three months. The percentage of original impact strength is given below in Table 2.

Table 2

| Example | Composition | Percentage of Original Impact Strength | | |
|---|---|---|---|---|
| | | One Month | Two Months | Three Months |
| 6 | 2% polyarylate**<br>98% polysulfone* | 84 | 74 | 60 |
| 7 | 10% polyarylate**<br>90% polysulfone* | 93 | 75 | 62 |
| 8 | 20% polyarylate**<br>80% polysulfone* | 87 | 79 | 81 |
| Control | 100% polysulfone* | 80 | 50 | 50 |

* UDEL polysulfone
** Ardel-D-100

The above results show that the weatherability of polysulfones is substantially improved by the addition of a polyarylate copolyester. Through the addition of a polyarylate copolyester, the polysulfone is better able to withstand exposure to ultraviolet light and to resist increases and decreases in temperature.

WHAT IS CLAIMED IS:



1. An improved polysulfone-containing weatherability composition consisting of about 1 wt.% to about 99 wt.% of a polysulfone and about 1 wt.% to about 99 wt.% of a polyarylate copolymer consisting essentially of:

a. about 20 mole % to about 30 mole % terephthalic acid;

b. about 20 mole % to about 30 mole % isophthalic acid; and

c. about 40 mole % to about 60 mole % bisphenol-A.

2. The composition in accordance with claim 1 wherein the polysulfone is present in an amount from about 80 wt.% to about 99 wt.% and the polyarylate copolyester is present in an amount from about 1 wt.% to about 20 wt.%.

3. The composition in accordance with claim 2 wherein the polyarylate copolyester consists essentially of:

a. about 25 mole % terephthalic acid;

b. about 25 mole % isophthalic acid; and

c. about 50 mole % bisphenol-A.

4. The composition in accordance with claim 1 wherein the polysulfone is a polyarylsulfone or a polyethersulfone.

5. The composition in accordance with claim 4 wherein the polysulfone is a polyarylsulfone.